# EUROPEAN PATENT APPLICATION

(11) **EP 1 318 465 A2**
(43) Date of publication of application: **11.06.2003**
(21) Application number: 02251946.6
(22) Date of filing: 19.03.2002
(51) Int. Cl.: G06F 17/30

(54) **Data management mechanism for converting and distributing data**

(30) Priority: 07.12.2001 JP 2001374564
(71) Applicant: FUJITSU LIMITED, Kawasaki-shi, Kanagawa 211-8588 (JP)
(72) Inventor: Minagawa, Kunio, Fujitsu Limited, Kawasaki-shi, Kanagawa 211-8588 (JP)
(74) Representative: Stebbing, Timothy Charles

(57) **Abstract**

A data management mechanism (1) comprises a unit (2) for managing data attributes, including a data conversion policy, a unit (3) for detecting timing for data conversion and/or distribution as a trigger, and a unit (4) for converting and/or distributing data depending on a data attribute managed by the unit (2) when the unit (3) detects the trigger. The data management mechanism (1) is managed by an operating system for managing a file system (11) and operates independently from an application program.

## Description

The present invention relates to a data management mechanism, more particularly to such a mechanism as well as a system and a server incorporating the same, for separating a job application program from data by managing data attributes and also managing data conversion logic and data conversion timing as file attributes, that is, a policy.

In a file system used as a conventional data management mechanism, although both the location management of data as a file and a data access method have been provided, the file system has basically had no relation with the data content/structure and a user has defined data processing logic by an application program.

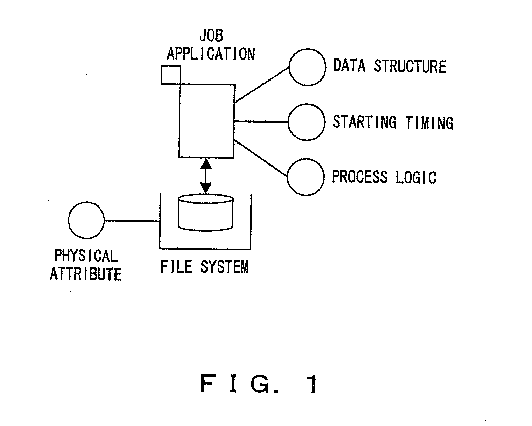

Fig. 1 shows a conventional file system. In this system, only physical data attributes are managed on the file system side, and data structure, file process starting timing and processing logic are all managed on the application program (job application) side.

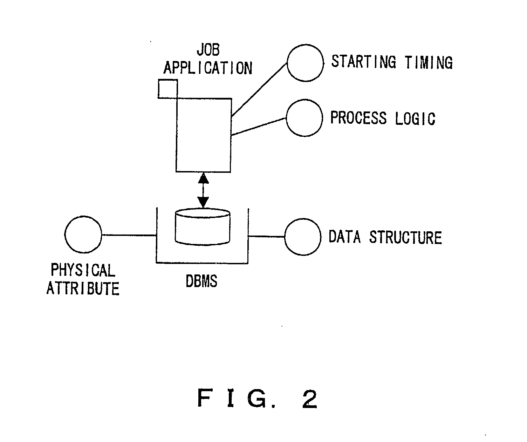

Fig. 2 shows a conventional database management system (DBMS). In Fig. 2, on the DBMS side, both physical data attributes and the data structure are managed and the design load of the application program is somewhat reduced. However, both data input/output starting timing and data processing logic are managed on the application program side. In such systems, a system in which a job application program operates generally manages data.

In the conventional data management system described above, not only data input/output, but also data process starting timing and process logic must be specified by programs on the job application side. Therefore, time and labor is required to develop a job application program, which is a problem.

Since all data processing, including data, belongs to the server of a system in which a job application program operates, a job application cannot be simply transferred to another server when the server load increases. Therefore, it is difficult to control load balance, which is another problem.

Furthermore, a new job application must be added taking into consideration the resource conditions of a system in which an existing job application program operates, which is another problem.

Embodiments of the present invention provide a data management mechanism for separating job application management from the management of data conversion/distribution and the like, in view of the problems described above. In one aspect of the present invention, a data management mechanism for managing data, including data in a file system, comprises an attribute management unit managing data attributes, including a data conversion policy, a trigger detection unit detecting timing for data conversion and/or distribution as a trigger and a data conversion/ distribution unit processing data conversion and/or distribution depending on the data attribute managed by the attribute management unit when the trigger is detected. This mechanism is configured so as to be managed by an operating system for managing the file system and to operate independently from an application program.

Other aspects of the invention provide a data management system and a file system incorporating the above mechanism, as well as a computer program for implementing the mechanism and a server (e.g. NAS server) employing the mechanism.

Reference is made, by way of example only, to the accompanying drawings in which:
Fig. 1 shows an example of a conventional file system;
Fig. 2 shows an example of a conventional database management system;
Fig. 3 shows the basic configuration of the present invention;
Fig. 4 shows the data management concept of the present invention;
Fig. 5 shows the basic data converting operation of the present invention;
Fig. 6 shows the file policy;
Fig. 7 shows the component configuration of the data management mechanism;
Fig. 8 is a flowchart showing the process of a policy operation by a user;
Fig. 9 is a flowchart showing the automatic data conversion/distribution process;
Fig. 10 shows the first configuration example of a system incorporating the data management mechanism;
Fig. 11 shows the second configuration example of a system incorporating the data management mechanism;
Fig. 12 shows the third configuration example of a system incorporating the data management mechanism;
Fig. 13 shows the fourth configuration example of a system incorporating the data management mechanism;
Fig. 14 shows a conventional data exchanging method between a plurality of job servers;
Fig. 15 shows the data exchange method between a plurality of job servers of the present invention;
Fig. 16 shows the system configuration in the case where a server at headquarters and a departmental server is of a UNIX (trademark) type and Windows (trademark) type, respectively;
Fig. 17 shows a conventional method for reporting a content click log collection result;
Fig. 18 shows the method for reporting a content click log collection result of the present invention; and
Fig. 19 shows the loading onto a computer of a program for implementing the present invention.

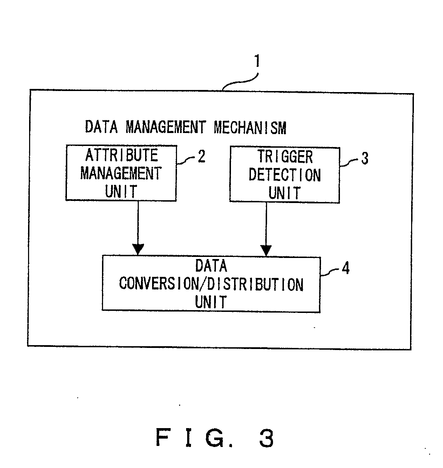

Fig. 3 shows the basic configuration of the data management mechanism 1 of the present invention. Fig. 3 shows the basic configuration of the data management mechanism for managing data, including data in a file system, that is, for exchanging/distributing data.

In Fig. 3, an attribute management unit 2 manages data attributes, including a data conversion policy, such as the correspondence between conversion source and conversion destination, a series of processes from conversion start to the end,and the like.

A trigger detection unit 3 detects timing for data conversion and/or distribution as a trigger. The trigger detecting conditions include the opening, closing, generation and deletion of a file and the like and also include the generation and deletion of a directory and the like. The conditions also include the modification of a file attribute and the like.

A data conversion/distribution unit 4 manages data conversion and/or distribution depending on the data attribute managed by the attribute management unit 2 when a trigger is detected.

According to the present invention, this data management mechanism 1 is managed by an operating system for managing a file system and operates independently from an application program.

In the preferred embodiment of the present invention, the data management mechanism can also be incorporated into a file system. Alternatively, this file system can be incorporated into a system running an application program. In this case, the data management mechanism can further comprise an operational interface unit exchanging information needed to interface with middleware in the system running an application program.

In the preferred embodiment of the present invention, the data management mechanism can also be incorporated into a network-attached storage system for implementing centered storage management through a network among one or more systems running an application program.

In this case, the data management mechanism can be also mounted in the file system layer of the network-attached storage system. Alternatively, the data management mechanism can be also mounted in the application layer of the network-attached storage system and can further comprise a system call monitor unit comprising commands for the opening, closing, renaming, generation and removal of a link to a file and the like, monitoring a system call that is called up before a system call for converting/distributing the data is executed and providing the detection of the called system call to the trigger detection unit 3 as a trigger.

Then, in a data management system for managing data, including data in a file system, an attribute management unit managing data attributes, including a data conversion policy, a trigger detection unit detecting timing for data conversion and/or distribution as a trigger and data conversion/distribution units converting and/or distributing data depending on the data attribute managed by the attribute management unit when the trigger is detected, are distributed and provided in two or more servers, and the data management system operates independently from an application program.

In the preferred embodiment of the present invention, the data management mechanism 1, attribute management unit 2, trigger detection unit 3, data conversion/distribution unit 4, operational interface unit and system call monitor unit can all be implemented by software.

According to the present invention, the steps of detecting timing for data conversion and/or distribution as a trigger, referring to a data conversion and/or distribution policy when the trigger is detected and converting and/or distributing data depending **on the content** of the policy are programmed to be executed by a computer with a data management mechanism for converting and/or distributing data.

According to the present invention, the steps of detecting timing for data conversion and/or distribution as a trigger, referring to a data conversion and/or distribution policy when the trigger is detected and converting and/or distributing data depending on the content of the policy are programmed and stored in a computer-readable portable storage medium to be used by a computer with a data management mechanism for converting and/or distributing data.

As described above, according to the present invention, data conversion/distribution can be executed independently from an application program and **thereby the job application (application task) and data management can be separated.**

The preferred embodiments of the present invention are described in detail below.

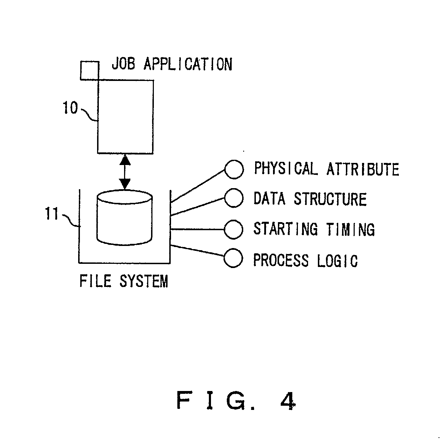

Fig. 4 shows the basic concept of the present invention. In Fig. 4, although a job application unit 10 and a file system 11 are connected, for example, by the same interface used in Fig. 1, physical data attributes, data structure, file starting timing, process logic and the like are all managed on the file system side 11, unlike Fig. 1.

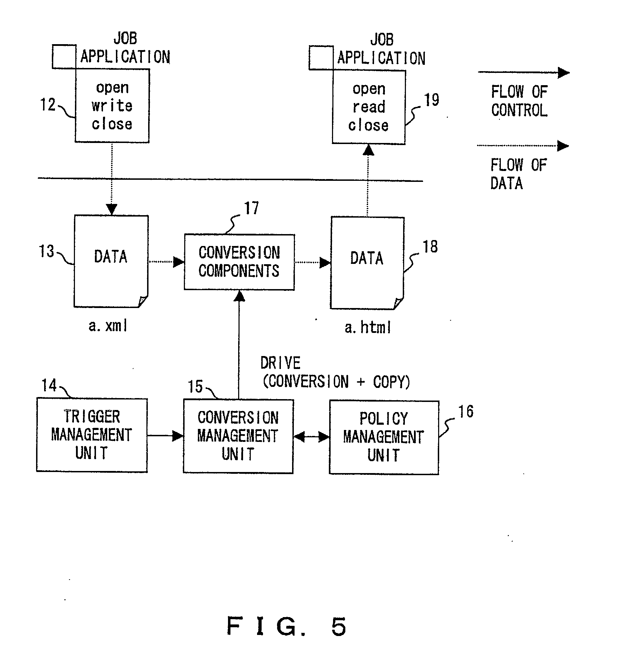

Fig. 5 shows the basic data converting operation in the preferred embodiment of the present invention. In Fig. 5, it is assumed that data generated by a job application unit 12 are converted and provided to a job application unit 19.

When a trigger management unit 14 detects the data conversion starting conditions of the data 13, for example, in a file of the name "a.xml" provided by the job application unit 12, the detection result is provided to a conversion management unit 15. The conversion management unit 15 refers to a file conversion policy managed by a policy management unit 16 and detects if the data 13 should be converted and copied, depending on the given trigger. Then, the conversion management unit 15 drives conversion components 17. The conversion components 17 convert the data 13 and provide data 18 in a file of the name "a.html" to the job application unit 19 as the process result.

In this case, the trigger management unit 14, conversion management unit 15, policy management unit 16 and conversion components 17 shown in Fig. 5 are all software programs.

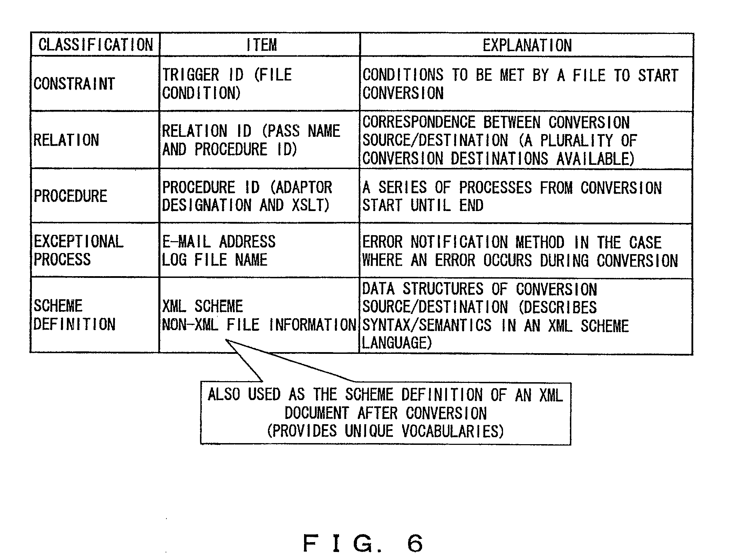

Fig. 6 shows a file policy managed by the policy management unit 16 shown in Fig. 5. In Fig. 6, a policy is classified into five categories: constraints, relation, procedures, exceptional process and scheme definition. Of these categories, the constraints correspond to the starting timing described with reference to Fig. 4, the relation, procedure and exceptional process correspond to the processing logic, and the scheme definition corresponds to the data structure.

The constraints corresponding to the starting timing are conditions met by a file to start a conversion process. The item to be referenced is a trigger ID corresponding to a file condition.

The trigger designation conditions for starting conversion include the opening, closing, name modification (renaming), generation (creation), deletion (removal) , linking of a file and the like, and also include the generation and deletion and the like of a directory. Furthermore, the general trigger designation conditions, for example, a daily specific time, the existence of a file itself and the like can also be designated in addition to a file attribute, that is, scheme definition modification and the like.

The relation as processing logic, that is, conversion logic indicates correspondence between a conversion source and conversion destination. A plurality of conversion destinations is also available. The items to be referenced are both a pass name and a relation ID corresponding to a procedure ID.

The procedures mean a series of processes from conversion start until the end. The procedure ID corresponds to adaptor designation, an XSLT (Extensible Style-sheet Language Transformations) for describing conversion rules for converting the structure of an XML (Extensible Mark-up Language) document into another format and the like.

The exceptional process indicates an error notification method in the case where there is a failure during file conversion and the like. The items to be referenced are an e-mail address for indicating the notification destination of an error, the file name of a log for recording an error and the like.

The scheme definition defines the respective data structure of both conversion source and conversion destination and, for example, describes syntax /semantics in an XML scheme language. The item to be referenced is an XML scheme or non-XML file information. This non-XML file information is also used as the scheme definition of an XML document after conversion and provides unique vocabularies.

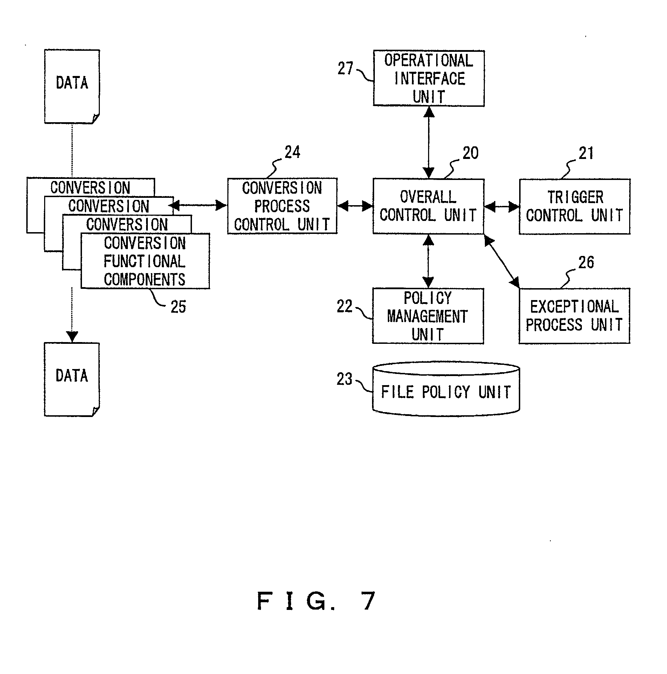

Fig. 7 shows the component configuration of a data management mechanism in the preferred embodiment. In Fig. 7, the data management mechanism comprises an overall control unit 20, a trigger control unit 21, a policy management unit 22, a file policy unit 23, a conversion process control unit 24, conversion functional components 25, an exceptional process unit 26 and an operational interface unit 27.

Of these units, the overall control unit 20, trigger control unit 21, policy management unit 22, conversion process control unit 24, conversion functional components 25, exceptional process unit 26 and operational interface unit 27 are all basically implemented by software.

The overall control unit 20 distributes processes in order to control the entire data management mechanism. The unit 20 coordinates necessary information and calls up a target component.

The policy management unit 22 manages policy information designated for a file. The unit 22 controls the registration, deletion, reference and update of the policy described with reference to Fig. 6.

The conversion process control unit 24 selects necessary conversion functional components 25 according to the policy information designated for a file, starts the conversion functional components 25 by setting parameters needed for the process. Then, the unit 24 waits for the completion of the process, judges the completion state and enables a necessary process, **e.g. an exceptional process (exception process) and the like.**

The trigger control unit 21 detects trigger conditions designated by a policy, that is, the constraints described above, and notifies the overall control unit 20 of the result. There are many mounting methods of the trigger control unit 21: the first pattern of incorporating the trigger control unit 21 into a file system, that is, a pattern of obtaining information about a trigger from a file system, the second pattern of using the trigger control unit 21 as a hook for a system call called up before **another system call, e.g.** opening and closing and the like of a file, is executed, and the third pattern of starting the trigger control unit 21 at specific time intervals as a general application program and detects the system condition and the like.

The operational interface unit 27 interfaces the data management mechanism with the user of policy information. The unit 27 comprises both an interface at a command level and a Web interface. The unit 27 also receives a manual data conversion request from a user and individually interfaces with middleware.

The conversion functional components (group) 25 actually convert data in a file. In the case of an XML document, the components 25 mean an XSLT processor and the like. In the case of a non-XML document, the components 25 mean a general ETL(Extraction, Transformation and Loading) tool, that is, an existing file conversion facility, such as a tool for performing extraction, transformation and loading in order to integrate distributed data.

The exceptional process unit 26 performs the post processes of a variety of processes, such as a data conversion process and the like. The unit 26 issues a message for an exceptional process, such as the logging of a process result, an error process, etc., and performs mail notification and the like.

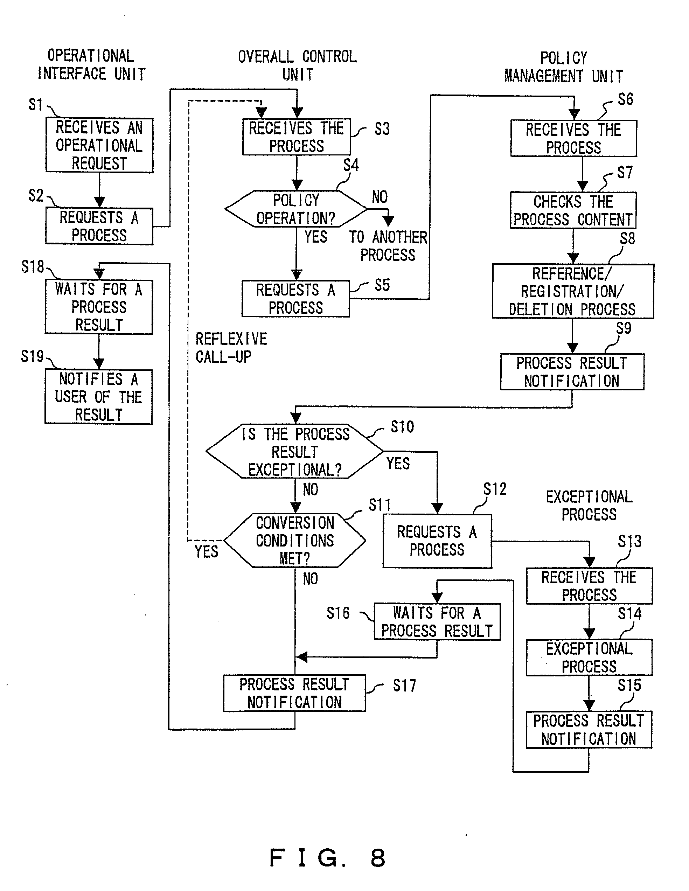

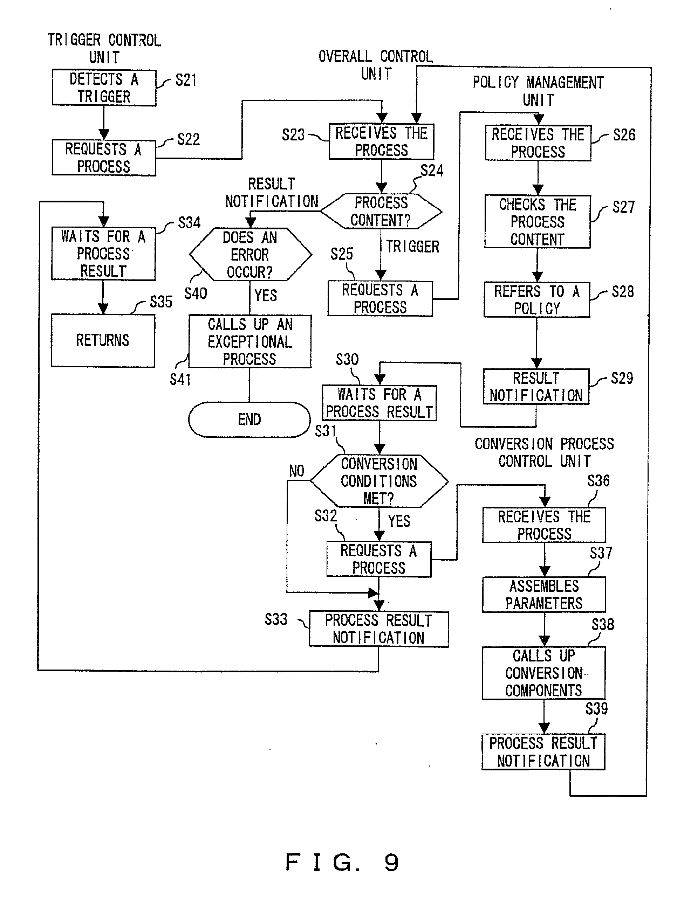

Figs. 8 and 9 are flowcharts showing the processes of the preferred embodiment. These flowcharts show only processes directly related to the present invention, and the description of the conventional processes as a file system, such as the transfer of a process result to a job application unit and the like, which are described later, are omitted here.

Fig. 8 is a flowchart showing a process in response to the policy operational request of a user, that is, a request for the registration, update, deletion, reference or the like of a policy. In Fig. 8, first, in step S1 the operational interface unit 27 receives an operational request from a user and in step S2 requests the overall control unit 20 to process the operation.

In step S3 the overall control unit 20 receives the request and in step S4 the unit 20 checks the process content. If it is judged that the process should be the process of a policy operation, in step S5 the unit 20 requests the policy management unit 22 to perform the process. If the process is not the process of a policy operation, the unit 20 moves to another process.

In step S6 the policy management unit 22 receives the requested process and in step S7 the unit 22 checks the process content. Then, in step S8 the unit 22 refers to, registers or deletes a policy and in step S9 the unit 22 notifies the overall control unit 20 of the process result.

Upon receipt of this result, in step S10 the overall control unit 20 checks whether the process **result is exceptional (an exception process). If not,** in step S11 the unit 20 checks conversion conditions to judge whether data must be converted. If the conversion conditions are met, in step S3 a process for calling up the conversion process control unit 24 is received as a reflexive call-up and the processes in and after step S4 are performed. In this case, data conversion is requested as another process.

If in step S10 the overall control unit 20 checks the process result and judges that an exceptional process should be performed, in step S12 a request for an exceptional process is issued to the exceptional process unit 26.

In step S13, the exceptional process unit 26 receives this request, in step S14 the unit 26 performs the exceptional process and in step S15 the unit 26 notifies the overall control unit 20 of the process result.

In step S16 the overall control unit 20 receives this process results and in step S17 the unit 20 notifies the operational interface unit 27 of the process result.

If in step S11 the conversion conditions are not met, in step S17 the overall control unit 20 also notifies the operational interface unit 27 of the process result.

In step S18 the operational interface unit 27 receives the process result and in step S19 the unit 27 notifies the user of the result.

Fig. 9 is a flowchart showing the automatic data conversion/distribution process . In Fig. 9, when in step S21 the trigger control unit 21 detects a trigger for exchanging data, in step S22 the unit 21 requests the overall control unit 20 to perform the process.

In step S23 the overall control unit 20 receives this request and in step S24 the unit 20 checks the process content. If the unit 20 judges that the process is a conversion trigger process, in step S25 the unit 20 requests the policy management unit 22 to perform the process.

In step S26 the policy management unit 22 receives this request and in step S27 the unit 22 checks the process content. Then, in step S28 the unit 22 refers to the content of the file policy unit (policy storing file) 23 and in step S29 the unit 22 notifies the overall control unit 20 of the process result.

In step S30 the overall control unit 20 receives this process result and in step S31 the unit 20 judges whether data conversion conditions are met. If the conversion conditions are met, in step S32 the unit 20 requests the conversion process control unit 24 to perform the process and in step S33 the unit 20 notifies the trigger control unit 21 of the process result. If the conversion conditions are not met, in step S33 the unit 20 immediately notifies the trigger control unit 21 of the process result. If the unit 20 requests the conversion process control unit 24 to perform a data conversion process, only the process request is made known to the trigger control unit 21 since conversion generally takes a lot of time.

In step S34 the trigger control unit 21 receives this process result and in step S35 the unit 21 returns to a trigger detection waiting state.

In step S36 the conversion process control unit 24 receives a data conversion process request from the overall control unit 20 and in step S37 the unit 24 assembles parameters needed for conversion. Then, in step S38 the unit 24 calls up the conversion functional components 25 to perform the process and receives the result. Then, in step S39 the unit 24 notifies the overall control unit 20 of the process result.

In step S23 the overall control unit 20 receives the process result of this data conversion and, for example, transfers data 18 to the job application unit 19 as a conversion result, as described with reference to Fig. 5. However, the description of the process is omitted. If it is judged that the result is the notice of the data conversion result when this data conversion result is checked in step S24, the overall control unit 20 checks the process result. However, if as the check result, there is a conversion error, in step S41 the unit 20 calls up the exceptional process unit 26 and terminates the process.

If a user manually requests data conversion/distribution process, the request is inputted to the operational interface unit 27 instead of the trigger control unit 21 described with reference to Fig. 9. Then, the operational interface unit 27 requests the overall control unit 20 to perform the process, and the processes in and after step S23 are performed. The final conversion result and the like are provided to the user through the operational interface unit 27.

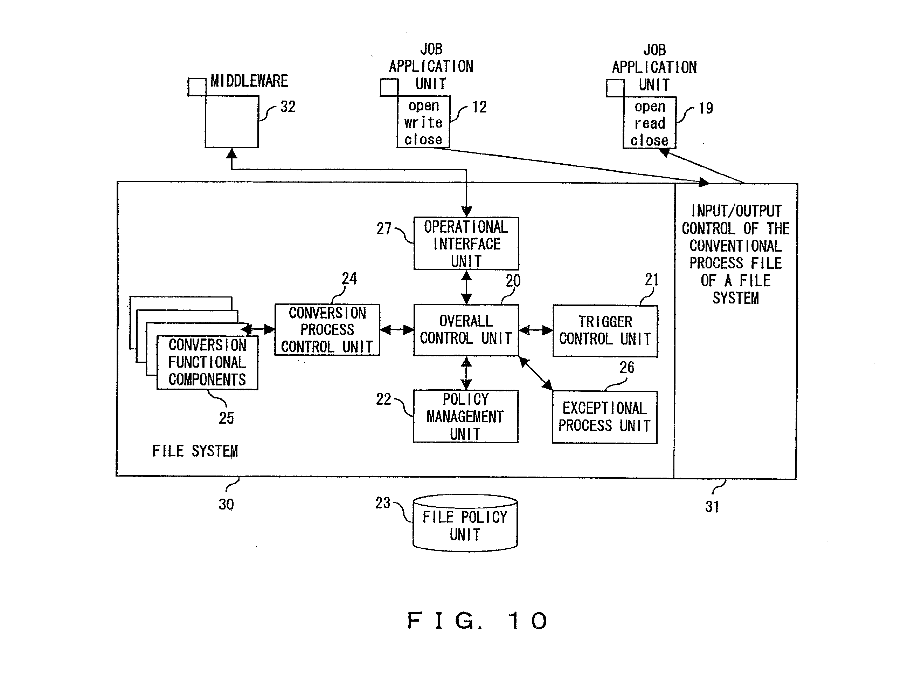

Next, configuration examples of the data processing system incorporating the data management mechanism of the preferred embodiment are described. Fig. 10 shows the first configuration example of such a system.

In this first configuration, the data management mechanism described with reference to Fig. 7 is mounted in a file system layer and is incorporated into one system running a job application program. In Fig. 10, a file system 30 comprising all the components, including the overall control unit 20 through the operational interface unit 27 that constitute a data management mechanism, are provided in addition to a file system 31 for performing file input/output control as a conventional process. In other words, although the data management mechanism is managed by an operating system for managing the file system, the mechanism operates independently from an application program even in the system. In this case, the file system 31 is also basically implemented by software.

In Fig. 10, for example, a file generated by the job application unit 12 is inputted through the file system 31 for performing file input/output control as a conventional process, and a conversion result is provided to the job application unit 19 through the file system 31. As described above, by incorporating a data management mechanism into a system running a job application program, data and an application program can be separated.

In Fig. 10, middleware 32 can directly exchange data with the operational interface unit 27. In other words, in cooperation with the middleware 32 in the job system, a part of the process performed by the middleware 32 can be performed by the data management mechanism without working through the file system 31 for performing the conventional process.

For example, in cooperation with an XML process function to be executed on the middleware 32 side, the content of a Web page, the location and the style can be handled as objects, and document object model (DOM) storing file generation and performing serialization and **executing** the partial reference function for performing control using a script language, and the storage/combination of a simple object access protocol (SOAP) of complex documents(input/output of an envelope), which are communications regulations for calling up data or services stored in another computer, based on an XML, HTTP and the like can be performed by the data management mechanism.

In cooperation with a **software** package operating on the middleware side, click log analysis, the performance management of enterprise application integration (EAI) for organically linking a plurality of computers used for business in an enterprise and for efficiently integrating data or processes, the data analysis of point-of-sales (POS), the processing of an SOAP-utilized **software** package and the like can be performed by the data management mechanism.

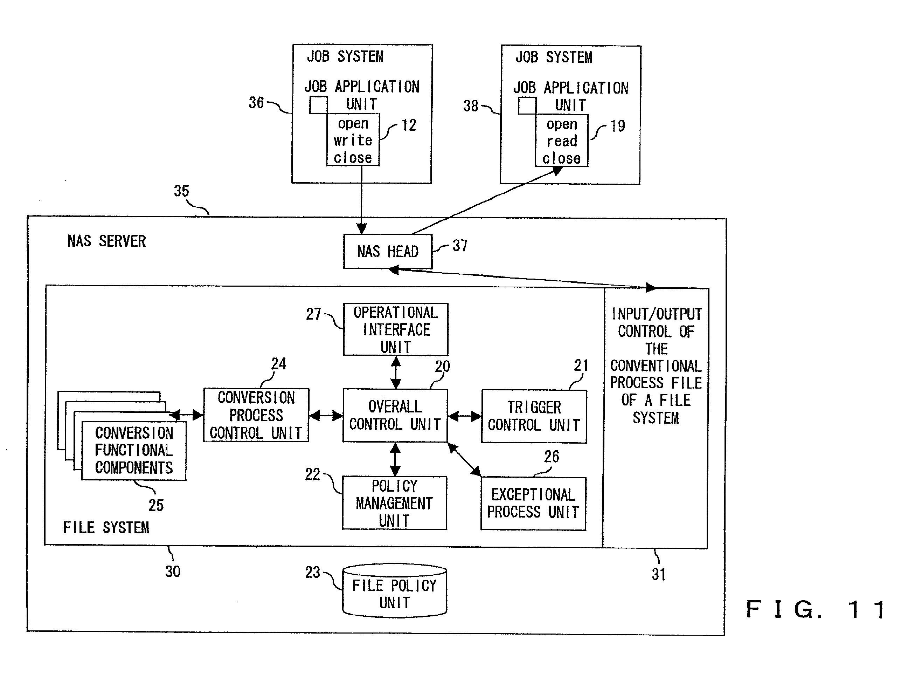

Fig. 11 shows the second configuration example of a data processing system incorporating the data management mechanism of the preferred embodiment. In this example, a server and storage equipment communicate with each other through a network and a data management mechanism is mounted in the file system layer of a network-attached storage (NAS) server for implementing centered storage management. Specifically, the data management mechanism is incorporated in a system different from a system running a job application program.

In other words, in this second example, although a data management mechanism is controlled by an operating system for managing a file system, the mechanism operates independently from the application program of another system.

In Fig. 11, components of the overall control unit 20 through the operational interface unit 27 in addition to the file system 31 for performing the conventional process are contained in the file system 30 of a NAS server 35.Then, a file generated by a job system 36 is inputted to the file system 30 through a NAS head 37 for mediating an access request for storage and the conversion result is provided to the job application **unit 19 in another job system 38 through the NAS head 37. The NAS head acts as the interface between the NAS and network clients.**

In this example, both the separation of data management from the job application and the reduction of used resources on the job system side, such as a memory, a CPU and the like, can be implemented.

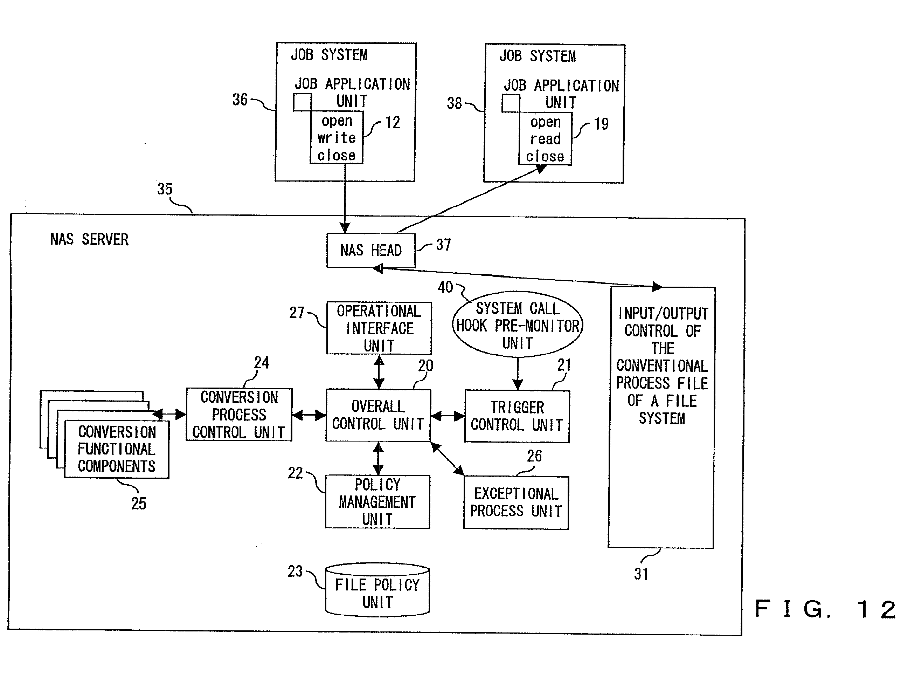

Fig. 12 shows the third configuration example of a data processing system incorporating a data management mechanism. In this case, the data management mechanism of the preferred embodiment is mounted in the general application layer of the NAS server 35.

In the examples shown in Figs. 10 and 11, for the trigger control mounting method described earlier, a pattern of incorporating the data management mechanism into the file system for performing the conventional process, is used. However, since in the third example, the data management mechanism is mounted in a general application layer, a hook is used for a system call, and as a result, a system call hook pre-monitor unit 40 for the monitor is added.

In this case, the NAS head 37 and system call hook pre-monitor unit 40 shown in Figs. 11 and 12 are also implemented by software.

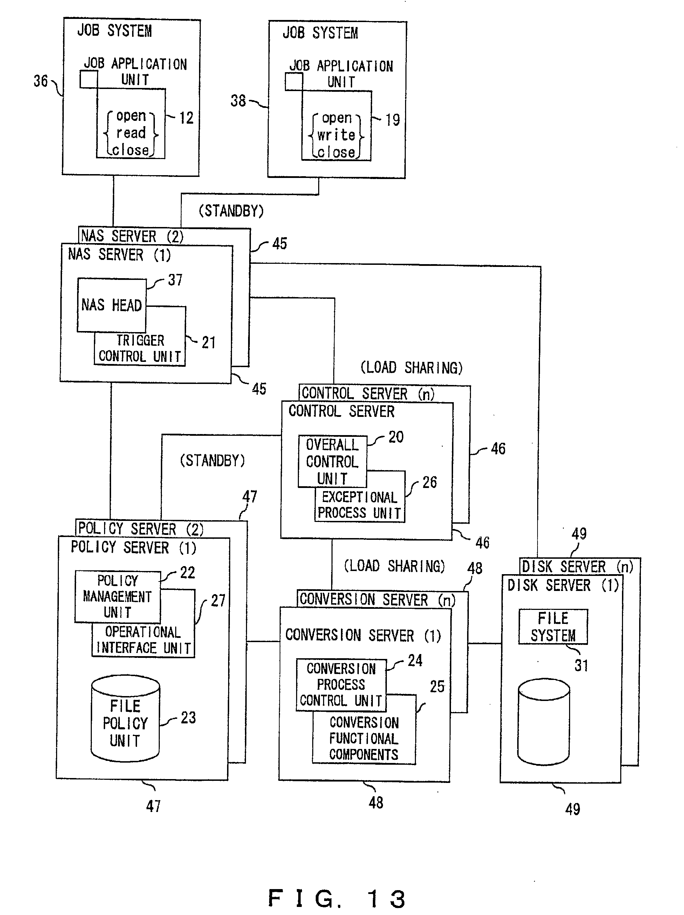

Fig. 13 shows the fourth configuration example of a system using the data management mechanism of the preferred embodiment. In this example, the entire data management mechanism is neither incorporated into one system nor one server, and all the components shown in Fig. 7 are distributed among and incorporated into a variety of servers.

Specifically, both the NAS head 37 and trigger control unit 21 are incorporated into an NAS server 45, and both the overall control unit 20 and exceptional process unit 26 are incorporated into a control server 46. The policy management unit 22, operational interface unit 27 and file policy unit 23 are incorporated into a policy server 47, and both the conversion process control unit 24 and conversion functional components 25 are incorporated into a conversion server 48. The file system 31 is incorporated into a disk server 49.

Each of the NAS server 45 and policy server 47 is dualized to prepare for failure, and one is used as a standby server. Since n of the control servers 46, n of the conversion servers 48 and n of the disk servers are provided, **load sharing** for parallel operation and the capacity of the entire file system can be secured.

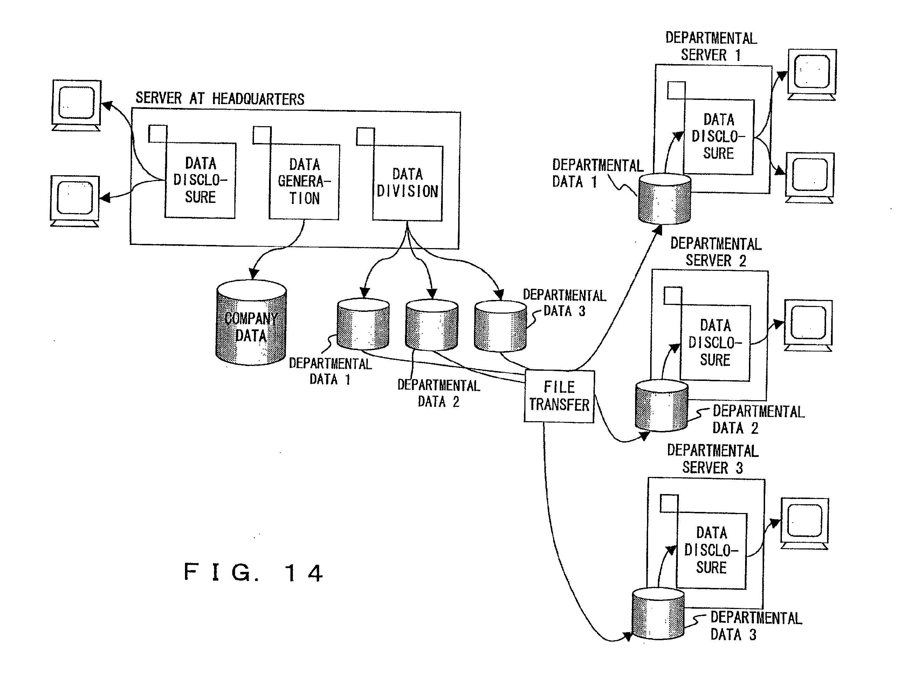

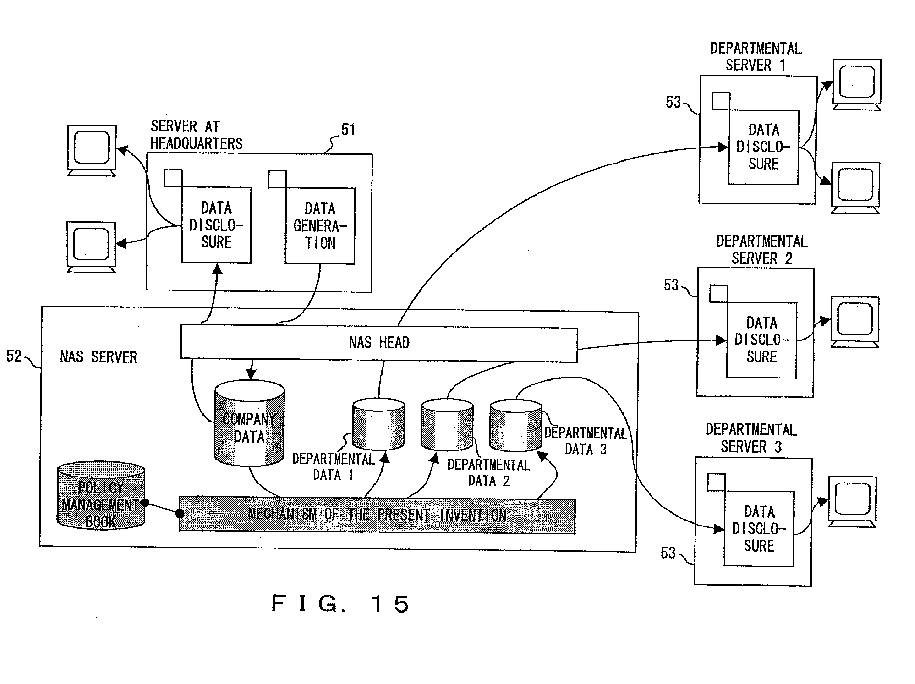

Next, application examples of the data management mechanism of the preferred embodiment are described compared with a conventional method with reference to Figs. 14 through 18. Figs. 14 and 15 show application examples of a job for exchanging data between a plurality of job servers. Fig. 14 shows a conventional method. Fig. 15 shows the method of the present invention.

If the present invention is used in this data exchange job, data generated by a user are stored without performing any other process and simultaneously, data obtained by converting the data are automatically generated without using the resources of the job server generating data in the first place. In this example, a plurality of pieces of departmental data are generated from company data and are disclosed to respective departmental servers.

In Fig. 14, first, using an application program, a server at headquarters generates company data and divides the data. As a result, a plurality of pieces of departmental data, specifically, three pieces of data for department 1 through department 3 are generated. Each piece of data is transferred to a respective file attached to the respective server of department 1 through department 3.

In Fig. 15, the company data generated by the headquarter server 51 are transmitted, for example, to **a NAS** server 52, are divided into a plurality of pieces of data for department 1 through department 3 by the data management mechanism in the **NAS** server 52 and are provided to the departmental servers 1 through 3, respectively, by file transfer. In this way, company data can be divided into a plurality of pieces of departmental data by using the generation completion of a company data file as a trigger.

In Fig. 15, a case where different operating systems (OS) are used between different pairs of servers connected to the NAS server 52 can also be considered. For example, a case where the operating system of the server at headquarters 51 is of a UNIX (trademark) type and the operating system of each departmental server 53 is of a Windows NT (trademark) type can also be considered. In this way, a system in which the NAS server 52 is used by a plurality of servers, each with a different operating system can also be configured. In this case, each of a UNIX type server and a Windows type server has a different access method to the **NAS** server 52.

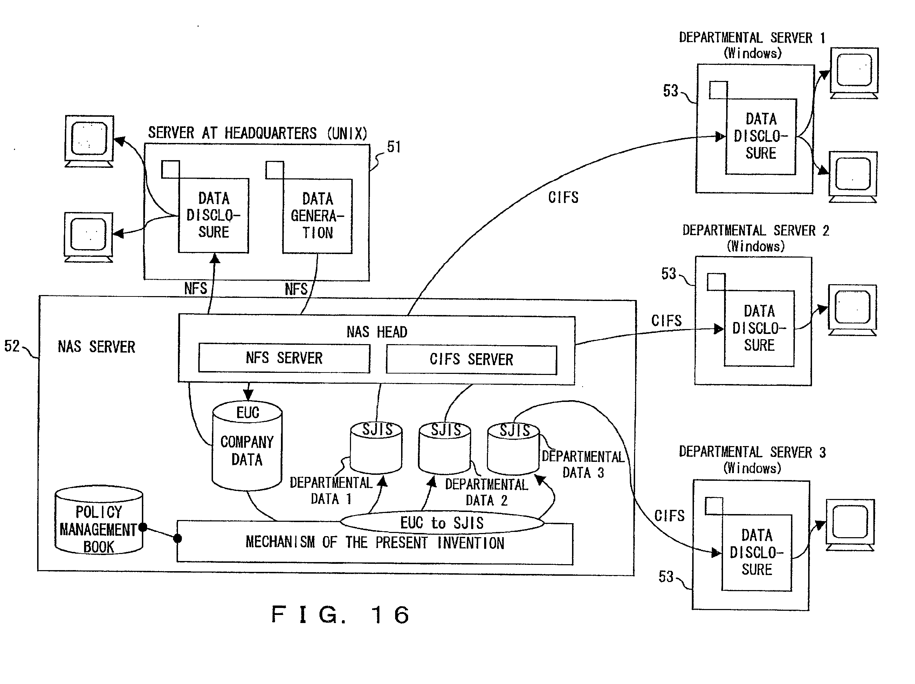

Fig. 16 shows the system configuration in the case where the server at headquarters 51 is of a UNIX (trademark) type and each departmental server 53 is of a Windows (trademark) type. A UNIX (trademark) server remotely accesses a file by a network file system (NFS) protocol, while a Windows (trademark) server remotely accesses a file by a common Internet file system (CIFS) protocol. Therefore, both a server for an NFS protocol and a server for a CIFS protocol must be prepared in the **NAS** head.

Each of a UNIX (trademark) system and a Windows system also has a different character code and data expression. Extension UNIX (trademark) code (EUC) and Shift JIS (SJIS) code are used as the standard character codes of data handled in a UNIX (trademark) system and a Windows system, respectively.

In the system shown in Fig. 16, either character code information or data expression information is **handled as a scheme definition (one of a number of policies) and** both the character code and data expression format can also be simultaneously converted. Therefore, a user can use conversion results without regard to differences in both character code and data expression.

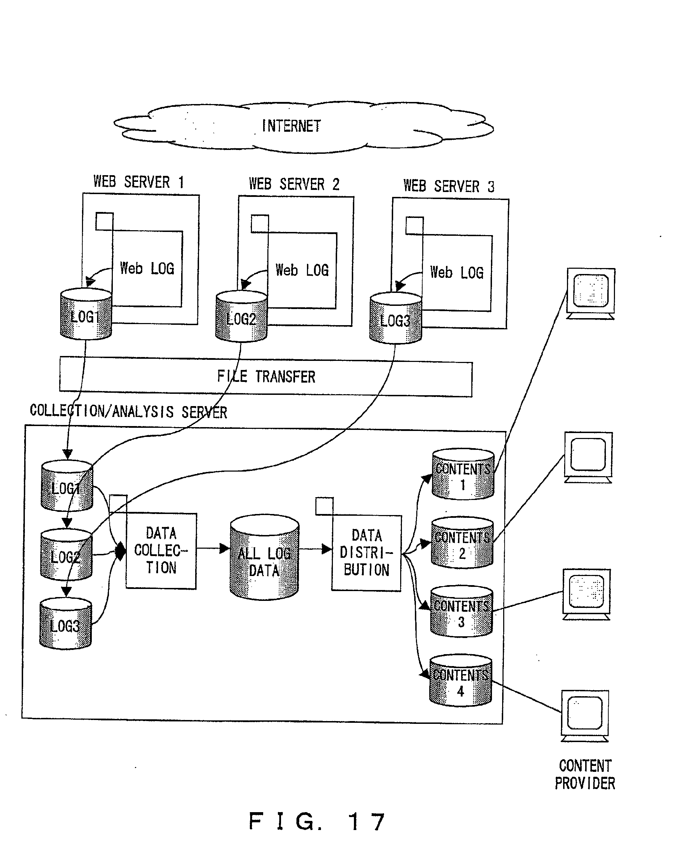

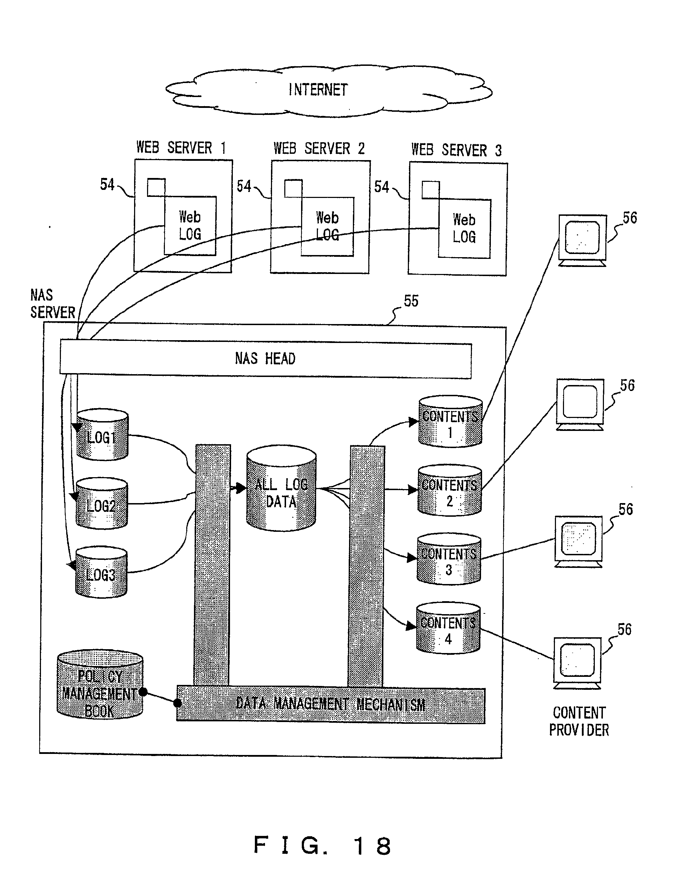

Figs. 17 and 18 show application examples of a job in which an Internet service provider for providing contents using a plurality of Web servers collects Web content click logs for each content provider and reports the corresponding collection result to each content provider.

According to the conventional method shown in Fig. 17, respective click logs recorded in Web servers 1 through 3 are provided to a collection/analysis server by file transfer, data are collected in the collection/analysis server using an application program and the entire log data are obtained. Then, the data are distributed and the respective click log collection results of contents 1 through 4 are obtained. Then, the respective click log collection results are reported to respective content providers.

In Fig. 18, a network storage system is adopted. In this case, the respective click logs of Web servers 1 through 3 are stored in respective log files in an **NAS** server 55. Then, the data management mechanism collects the respective click logs as the entire log data, distributes the entire log data for each content and reports the respective pieces of log data to the respective content providers 56.

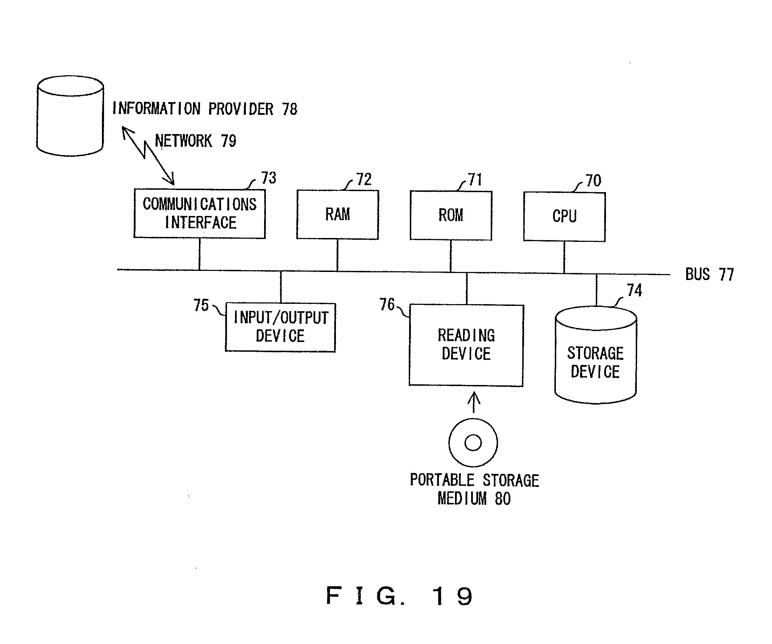

Although the specific examples of the data management mechanism of the present invention have been described above, a system with this data management mechanism can be configured as a general computer system. Fig. 19 shows the configuration of such a computer system, that is, a hardware environment.

In Fig. 19, such a computer system comprises a central processing unit (CPU) 70, a read-only memory (ROM) 71, a random-access memory (RAM) 72, a communications interface 73, a storage device 74, an input/output device 75, a portable storage medium reading device 76 and a bus connecting all the units and devices.

For the storage device 74, various forms of storage devices, such as a hard disk, magnetic disk and the like can be used. The programs shown in the flowcharts in Figs. 8 and 9 and the programs defined in the accompanying claims are stored in such a storage device 74 or the ROM 71. By the CPU 70 executing such programs, both the data management of the preferred embodiment and the separation between data and an application program can be implemented.

Such programs can also be stored, for example, in the storage device 74 through first a network 79 and then the communications interface 73 from an information provider 78 side. Alternatively, such programs can be stored in a portable storage medium 80 that is put on the market and is distributed, the medium 80 can be set in the reading device 76 and the CPU 70 can execute the programs. For the portable storage medium 80, various forms of storage media, such as a CD-ROM, a flexible disk, an optical disk, a magneto-optical disk and the like, can be used. By the reading device 76 reading the programs stored in such a storage device, data conversion/distribution in the preferred embodiment can be implemented.

As described above, in the preferred embodiments, by managing/performing data conversion on a data management mechanism side, the resources, such as a memory, a CPU and the like, of a system running a job application program are saved, and data conversion/distribution process and job application can be independently performed without synchronization.

Specifically, job application and data management can truly be separated. First, a job application can be performed in an arbitrary system, and a job application unit can be freely mounted according to system load since the mounting freedom of a job application unit can be extended.

Secondly, since there is no need to take into consideration data conversion/distribution, each job system can be operated independently.

Thirdly, in a job application side, a data structure representing desired data is designed, and a data input/output process is performed. Therefore, there is no need to incorporate data conversion/distribution logic into an application program, and thereby the design of a job application program is simplified.

The present invention can be implemented in a variety of forms without departing from the present invention. Therefore, the preferred embodiments described above are just examples in all respects and must not be considered restrictive.

## Claims

1. A data management mechanism (1) for managing data, including data in a file system (11), and specifically for converting/distributing such data, comprising:
an attribute management unit (2) managing data attributes, including a data conversion policy;
a trigger detection unit (3) detecting timing for data conversion and/or distribution as a trigger; and
a data conversion/distribution unit (4) converting and/or distributing data depending on a data attribute managed by the attribute management unit (2) when the trigger is detected,
which is managed by an operating system for managing the file system (11) and operates independently from an application program.

2. The data management mechanism (1) for converting /distributing data according to claim 1, which is incorporated into the file system (11).

3. A file system (11) including the data management mechanism (1) according to claim 2, which is further incorporated into a system running the application program.

4. The data management mechanism (1) for converting /distributing data according to claim 1 **or 2, further comprising:**
an operational interface unit (27) exchanging information to link a process between the data management mechanism (1) andmiddleware (32) in a system running the application program.

5. The data management mechanism (1) for **converting/distributing data according to claim 1, 2, or 4,** which is incorporated into a network-attached storage system for implementing centered storage management through a network between the data management mechanism (1) and one or more systems running the application program.

6. The data management mechanism (1) for converting /distributing data according to claim 5, which is mounted in a file system layer of the network-attached storage system.

7. The data management mechanism (1) for converting /distributing data according to claim 5, which is mounted in an application layer of the network-attached storage system, further comprising:
a system call monitor unit (40) monitoring a system call called up prior to a system call for the data conversion and/or distribution, including opening, closing, renaming, generation, removal and linking of a file, and providing detection of the called system call to said trigger detection unit (3) as the trigger.

8. A data management system comprising a data management mechanism (1) for managing data, including data in a file system (11), the data management mechanism (1) comprising:
an attribute management unit (2) managing data attributes, including a data conversion policy;
a trigger detection unit (3) detecting timing for data conversion and/or distribution as a trigger; and
a data conversion/distribution unit (4) converting and/or distributing data depending on data attributes managed by the attribute management unit (2) when the trigger is detected, **wherein said units (2, 3, 4)** are distributed and provided in two or more servers, which operate independently from an application program.

9. A program used by a computer with a data management mechanism (1) for converting and/or distributing data, for enabling the computer to execute the process, the process comprising:
detecting a trigger for timing for the data conversion and/or distribution;
referring to data conversion and/or distribution policy when the trigger is detected; and
converting and/or distributing data depending on a content of the policy.

10. A computer-readable portable storage medium used by a computer with a data management mechanism (1) for converting and/or distributing data, for enabling the computer to execute a process, the process comprising:
detecting a trigger for timing for the data conversion and/or distribution;
referring to data conversion and/or distribution policy when the trigger is detected; and
converting and/or distributing data depending on a content of the policy.

11. A data management mechanism (1) for managing data, including data in a file system (11), and specifically **for** converting /distributing such data, comprising:
attribute management means (2) for managing data attributes, including a data conversion policy;
trigger detection means (3) for detecting timing for data conversion and/or distribution as a trigger; and
data conversion/distribution means (4) for converting and/or distributing data depending on a data attribute managed by the attribute management means (2) when the trigger is detected, which is managed by an operating system for managing the file system (11) and operates independently from an application program.

12. **A network-attached storage system incorporating the data management mechanism of claims 5 or 6.**
